(19) **Europäisches Patentamt / European Patent Office / Office européen des brevets**

(11) **EP 1 837 786 B1**

(12) **EUROPEAN PATENT SPECIFICATION**

(45) Date of publication and mention
of the grant of the patent:
**02.06.2010 Bulletin 2010/22**

(51) Int Cl.:
***G06F 17/50*** *(2006.01)*

(21) Application number: **06425192.9**

(22) Date of filing: **23.03.2006**

(54) **Method for determining the dynamic distribution of a fluid in a vehicle tank**

Verfahren zur Bestimmung der dynamischen Verteilung eine Flüssigkeit in einem Fahrzeugtank

Méthode pour déterminer la distribution dynamique d'un fluide dans un réservoir de véhicule

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**26.09.2007 Bulletin 2007/39**

(73) Proprietor: **ELASIS - Società Consortile per Azioni 80038 Pomigliano d'Arco (IT)**

(72) Inventors:
• **Fortunato, Francesco,
c/o ELASIS Società Consortile per Azioni
80038 Pomigliano d'Arco (IT)**
• **Oliva, Paolo,
c/o ELASIS Società consortile per Azioni
80038 Pomigliano d'Arco (IT)**

(74) Representative: **Jorio, Paolo et al
STUDIO TORTA
Via Viotti 9
10121 Torino (IT)**

(56) References cited:
**DE-A1- 19 924 207**

• **EL MOCTAR O: "NUMERISCHE SIMULATION VON SLOSHING IN TANKS" SCHIFF UND HAFEN, SEEHAFEN-VERLAG, HAMBURG, DE, vol. 54, no. 10, October 2002 (2002-10), pages 201-202,204,20, XP001140747 ISSN: 1436-8498**
• **HOI SUM IU, W. L. CLEGHORN AND J. K. MILLS: "Design and Analysis of Fuel Tank Baffles to Reduce the Noise Generated from Fuel Sloshing" SAE WORLD CONGRESS, no. 2004-01-0403, 8 March 2004 (2004-03-08), XP002400371 Detroit, Michigan**

**Description**

The present invention relates to a method for determining the dynamic distribution of a fluid in a vehicle tank.

In particular, the present invention relates to a method that allows to predict the dynamic volumic distribution of a fluid, in particular of a fuel, within a vehicle tank, such as for example a road vehicle, to which explicit reference will be made without for this loosing in generality.

The prior art document DE 199 24 207 discloses a method and a system for simulating a fuel tank in a vehicle.

As it is known, the fluid-dynamic knowledge of fuel within the tank of a vehicle is essential to accurately design the tank itself. In particular, in the design step of fuel tanks for road vehicles it is necessary to simulate the motion and the dynamic distribution of fuel within the tank itself when the latter is subjected to the shifts caused by external stresses due to the vehicle motion, so as to predict the noise generated by the movement of fuel and identify possible leakage of fuel from the "fuel vapour" relief valves connected to the tank.

In other words, the fluid-dynamic behaviour of fuel within the tank must be simulated in advance to eliminate or reduce the above-listed problems which, as it is known, are related to the so-called fuel "sloshing".

On the basis of the results of such simulations it is indeed possible to appropriately design the geometric configuration of the tank and, contextually, to identify the optimal arrangement position(s) of the "fuel vapour" relief valves in the tank so as to minimise the possible leakage of fuel from the aforesaid valves and/or tank overpressure conditions due to inefficient evacuation of the fuel vapour.

It is the object of the present invention therefore to provide a new method that allows to simulate the fluid-dynamic behaviour of fuel within a vehicle tank, so as to discriminate the areas within the tank which do not come into contact with the fuel from the areas within the tank which are concerned by temporary or permanent immersion in fuel during the simulation.

The above object is reached by the present invention in that it relates to a method for determining the dynamic distribution of fuel within a tank of a vehicle, according to claim 1 and, preferably, in any of the subsequent claims depending either directly or indirectly on claim 1.

The present invention will now be described with reference to the accompanying drawings illustrating a non-limitative embodiment example thereof, in which:

- figure 1 is a flow diagram of the operations implemented by the method for determining the dynamic distribution of fuel within a vehicle tank, provided according to the dictates of the present invention;
- figure 2 is a perspective view of a volumic grid associated to a geometric modelling of the tank;
- figure 3 is a perspective view of a fuel distribution within the volumic grid shown in figure 2 in a predetermined initial simulation time instant;
- figure 4 is a perspective view of a fuel distribution within the volumic grid shown in figure 2 in an intermediate time instant following the initial predetermined instant to which figure 3 is associated;
- figure 5 is a perspective view of a volumic immersion map of fuel within a tank;
- figure 6 is a flow diagram of the operations implemented by the method during calculation of the immersion parameters of the volumic cells comprised in the volumic grid.

The present invention is essentially based on the principle of simulating tank shifts on the basis of a predetermined law of motion to calculate, at predetermined time intervals, the volumic distribution of fuel within the tank, so as to discriminate, on the basis of the volumic distributions calculated in said time intervals, the areas or portions of space within the tank which are temporarily immersed in fuel for a time interval shorter than a predetermined time threshold and/or and the areas or portions of space within the tank, which do not come into contact with the fuel, i.e. are not immersed in fuel during such shifts.

In other words, the present method envisages a series of operations for simulating the motion of fuel within the tank, and a series of processing operations and simulation results for determining the areas or portions of space within the tank which do not come into contact with the fuel, and/or which are only partially in contact during a time range shorter than a predetermined time threshold.

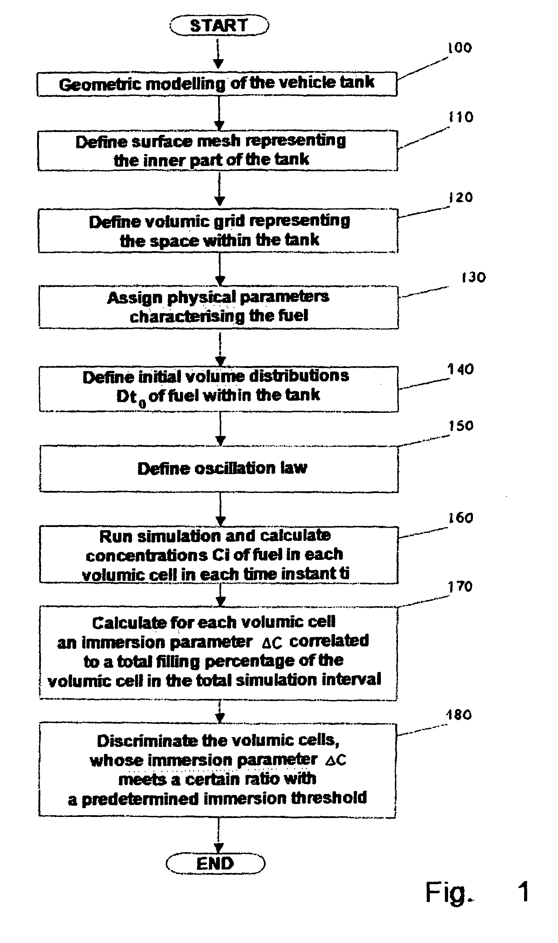

With reference to figure 1, the method envisages an initial step (block 100), in which the vehicle tank is geometrically modelled. In particular, this step envisages making a geometric model which reproduces the internal shape of the tank. In the case in point, such geometric modelling may be preferably, but not necessarily, simplified, i.e. may provide a three-dimensional representation of the tank without external connection elements, such as for example valves, or fastening devices of the same, etc.

Following the geometric modelling of the tank, the method envisages a discreet surface modelling step of the tank itself. Such operation consists in defining a surface mesh representing the internal wall of the tank.

In particular, the surface mesh comprises a plurality of flat cells, each of which represents the two-dimensional space of a corresponding surface portion of the internal wall of the tank (block 110).

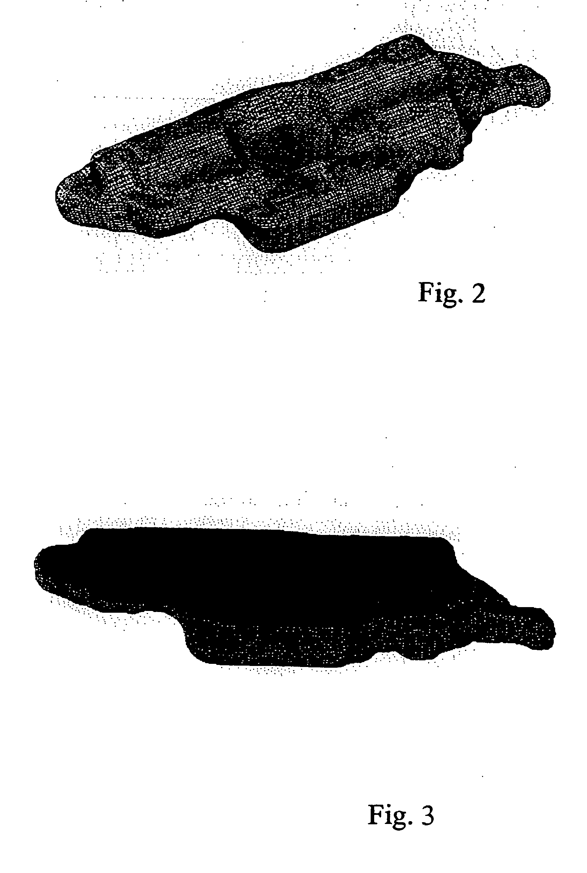

At this point, the method consists in defining, on the basis of the geometric model of the tank, a volumic grid (shown in figure 2) which geometrically represent the space within the tank itself. More in detail, the volumic grid is divided into a plurality of volumic filling cells, each of which represents a corresponding portion of three-dimensional space present within the tank (block 120).

Following the definition of the surface mesh and the volumic grid, the method envisages to receive in input a series of physical parameters which characterise the fuel, such as for example fuel density and viscosity (block 130). Such physical parameters may be for example user-determined according to the considered fuel.

Once the physical parameters characterising the fuel are received in input, the method envisages a definition step of the initial volumic distribution $Dt_0$ of the fuel within the tank (block 140). In particular, in this step, a concentration value $C_{ci}$ indicating the filling percentage by fuel of the volumic filling cell itself is assigned to each volumic filling cell in the volumic grid. The concentration $C_{ci}$ of fuel in each volumic cell may vary from a minimum predetermined value corresponding, for example, to zero, indicating a condition of total absence of fuel in the space within the volumic cell, and a maximum volume equal, for example, to the unit, and indicating a condition of complete filling of fuel in the volumic cell itself.

Figure 3 shows, by way of example, a volumetric grid resulting from the operations implemented in block 140, in which the volumic cells associated to a condition of complete immersion in fuel are shaded light grey, while the volumic cells associated to a condition of non-immersion are shaded in dark grey.

At this point, the method envisages to establish an oscillation time law which represents the whole of stresses and shifts to which the tank will be subjected in the simulation to be actuated on the same (block 150).

The oscillation law is established in the known way and may represent a dynamic of the shifts sustained by the tank during vehicle motion in different situations and/or on different roads, such as for example hilly roads, and/or urban streets, and/or mountain roads, etc.

At this point, from the initial volumic distribution $Dt_i=Dt_0$ of the fuel within the tank represented by the volumic grid, and on the basis od the fuel physical parameters, the method provides for implementing the oscillation law so as to obtain a simulation of the dynamic distribution of the fuel within the tank.

During the simulation, the fuel concentrations $C_{ci}$ present in each volumic cell of the volumic grid of the tank in n instants are calculated in a discreet time domain divided into a series of instants ti, with i being from 1 to n. In other words, during the simulation, the method determines and stores at each time instant ti, the fuel concentration $C_{ci}$ in the volumic cell, i.e. the filling percentage of the same, and identifies, on the basis of the concentrations $C_{ci}$ themselves, the total distribution of fuel within the tank.

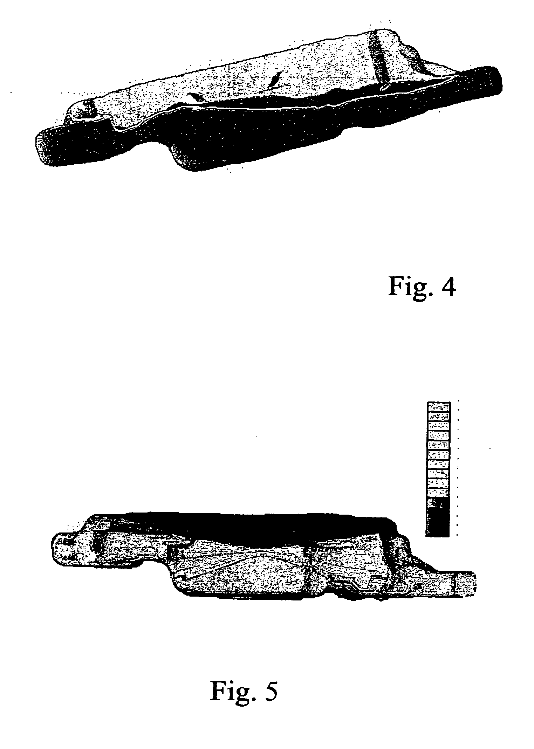

Figure 4 shows, by way of example, a volumic grid determined by the operations implemented in block 150 in a certain instant ti, in which the total fuel distribution (shown in dark grey) is visible within the volumic cells.

Once completing the determination and storage of fuel volumic distributions $Dt_i$ in the tank in n ti instants, the method envisages to: calculate, in the way described in detail below, for each volumic cell, an immersion parameter $\Delta C$, which is related to a total filling percentage of the volumic cell in the total simulation interval $\Delta T_T$.

Following the determination of immersion parameters $\Delta C$ of the volumic cells, the method is capable of discriminating, according to the immersion parameters, the volumetric cells subjected to prolonged immersion, called immersed cells hereinafter, from the non-immersed volumic cells, which are subjected either to minimum temporarily immersion or which do not come into contact with the fuel. In the case in point, the method is able to discriminate immersed volumic cells from non-immersed volumic cells by verifying, for each volumic cell, whether the respective immersion parameters $\Delta C$ meets a certain relation with a predetermined immersion threshold or not (block 180).

More in detail, such discrimination may envisage that a volumic cell is a "non-immersed volumic cell" when the corresponding immersion parameter $\Delta C$ is lower than or equal to the predetermined immersion threshold. In the case in point, the method may, for example, identify the non-immersed volumic cells when it is verified that the latter present an immersion parameter $\Delta C$ equal to an immersion threshold predetermined to be zero; in this way, all the volumic cells which during the simulation are never occupied by fuel are identified.

Evidently, by assigning a low value higher than zero to the immersion threshold, non-immersed volumic cells which are temporarily immersed by the fuel for a predetermined time interval shorter than a predetermined threshold may be discriminated.

At this point, the method extrapolates from the whole of discriminated non-immersed volumic cells those which are in contact position with the inner wall of the tank so as to determine the non-immersed area or portion of inner wall of the tank.

In particular, the method provides for interpolating the surface mesh and the whole of discriminated volumic cells to identify the corresponding non-immersed flat cells, and determines according to the latter the area of portion of inner wall of the tank which is either not immersed and/or temporarily immersed for a minimum fraction of time.

After determining the flat cells and the non-immersed volumic cells, the method is therefore capable of advantageously providing a series of indications concerning the area within the tank which, during the simulation was concerned by a reduced temporary contact or no contact with the fuel.

In particular, the method may advantageously represent the surface mesh of the tank in a graphic format, highlighting the non-immersed flat cells with respect to the immersed flat cells. Similarly, the method may also represent in graphic format the volumic grid of the tank, highlighting the non-immersed volumic cells with respect to the immersed volumic cells.

It is appropriate to add that the method may advantageously determine a volumic immersion map which corresponds to a volumic grid in which to each volumic cell is assigned the immersion parameter $\Delta C$ determined in the total simulation time interval $\Delta T_T$, instead of the concentration $C_{ci}$ in instant $t_i$ (figure 5).

It is apparent that such representation may be carried out in a different way, providing for example a series of geometric parameters or coordinates which allow to identify the areas (or space) within the tank which were not concerned by contact with the fuel during the simulation.

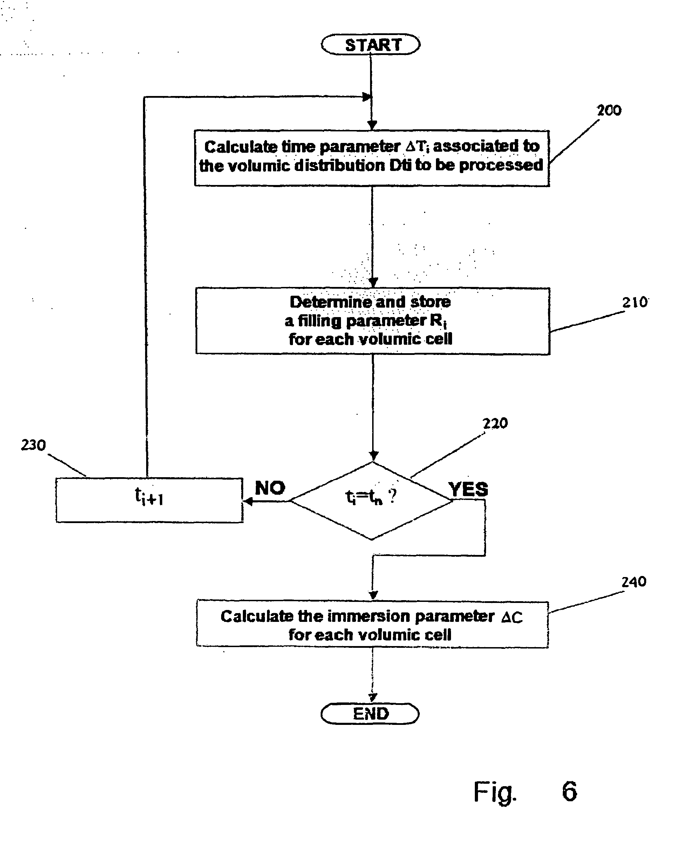

As regards the operations for calculating the $\Delta C$ immersion parameter implemented by the method, they are shown in the flow diagram in figure 6.

In particular, the method envisages a processing step of the n volumic distributions Dti of the fuel calculated and stored in n time instants ti during the simulation. Such processing envisages the iterative implementation of the following operations from the first instant $t_1$.

A first operation consists in calculating the time parameter $\Delta T_i$ associated to the volumic distribution Dti to be processed. The time parameter $\Delta T_i$ indicates the time interval from $t_i$ to $t_{i-1}$. Evidently, the time parameter $\Delta T_1$ associated to the first processing cycle is equal to $t_1 - t_0$, in which $t_0$ is the time instant related to the initial volumic distribution $Dt_0$, and $t_1$ is the instant in which the first filling of the volumic cells during the simulation is calculated (block 200).

After determining the time parameter $\Delta T_i$, the method envisages to determine and store a filling parameter $R_i$ for each volumic cell (block 210). In the case in point, the filling parameter $R_i$ of each volumic cell is calculated by applying the following ratio:

$R_i = C_{ci} * \Delta T_i$; where $C_{ci}$, as mentioned above, indicates the concentration, i.e. the filling percentage in instant $t_i$ of the volumic cell by fuel.

At this point, the method checks (block 220) whether instant $t_i$ corresponds to final calculation instant $t_n$ of the simulation, and if this is not so (NO output from block 220) considers the next time instant $t_{i+1}$ (block 230), calculates the next time parameter $\Delta T_{i+1}$ (block 200) and then determines the filling parameter $R_{i+1}$ in the way described above (block 210).

Otherwise, in the affirmative case (YES output from block 220), i.e. if instant $t_i$ corresponds to final calculation instant $t_n$ of the simulation, the method provides for calculating (block 240), for each volumic cell, the immersion parameter $\Delta C$ by implementing the following ratio:

$$\Delta C = \sum_{i=0}^{i=n} Ri \Big/ \Delta T_T$$

in which $\Delta T_T = \sum_{i=1}^{i=n} \Delta Ti$ is the total time interval of the simulation.

In the case in point, the method provides for normalising for each volumic cell the filling parameters $R_i$ determined during the total simulation interval $\Delta T_T$ of the fuel distribution $D_{ti}$ in the tank so as to determine the immersion parameter $\Delta C$, which represents the time fraction, of the total simulation time $\Delta T_T$, in which the volumic cell is potentially in a condition of immersion in the fuel.

The above-described method may be advantageously implemented by an electronic computer provided with a processing unit which implements the above-described operations; a keyboard adapted to allow an user to enter the physical parameters of the fuel and/or to set the ti instants; and a display device adapted to graphically show to the user him/herself the volumic grid and/or the surface mesh and/or the immersion map.

The advantages of the above-described method are apparent; it allows to determine in a fully automatic way the areas of walls within the tank which are concerned by temporary contact or no contact with the fuel during the various shifts sustained by the tank, thus allowing to immediately identify the optimal zones for positioning the "fuel vapour" relief valves in the tank.

Indeed, thanks to the aforesaid method, during the designing step, it is possible to precisely determine the connection areas which are subject to leakage from the valves and/or which may determine an inefficient evacuation by the fuel vapour valves.

It is finally apparent that changes and variations can be made to the method described and illustrated here without however departing from the scope of the present invention, as defined by the accompanying claims.

**Claims**

1. A computer-implemented method for determining the dynamic distribution of a fluid within a vehicle tank, **characterised in that** it comprises the steps of:

   - simulating (160) shifts of the tank according to a certain oscillation law related to the motion of said vehicle;
   - calculating (170) during said simulation, at predetermined time instants (ti), the volumic distribution (Dti) of fluid within said tank;
   - discriminating (180), on the basis of the volumic distributions (Dti) calculated in said predetermined time instants (ti), the portions of space within said tank which do not come into contact with the fluid during said simulation.

2. A computer-implemented method according to claim 1, comprising the step of discriminating (180), on the basis of the volumic distributions (Dti), the portions of space within said tank which are temporarily immersed in the fluid for a time interval shorter than a predetermined time threshold.

3. A computer-implemented method according to claims 1 or 2, comprising the steps of:

- representing said tank by means of a volumic grid comprising a plurality of volumic filling cells;
- assigning (140) to each volumic cell an initial concentration (Cci) indicating the filling percentage of fluid in the volumic cell itself;
- during said simulation, determining (170) for each volumic cell the corresponding concentrations (Cci) of fluid in each time instant (ti);

said discriminating step (180) comprising the step of determining for each volumic cell in each time instant (ti) a filling parameter (Ri) of said volumic cell related both to said concentration (Cci), and to said time interval ($\Delta$Ti) elapsed between the current time instant (ti) and a previous time instant (ti-1).

4. A computer-implemented method according to claim 3, in which said discriminating step (180) comprises the step of discriminating, for each volumic cell, an immersion parameter ($\Delta$C) related to a total filling percentage of the volumic cell itself in the total simulation interval ($\Delta$TT).

5. A computer-implemented method according to claims 4, in which said immersion parameter ($\Delta$C) is related to the whole of filling parameters (Ri).

6. A computer-implemented method according to claim 4 or 5, **characterised in that** said immersion parameter ($\Delta$C) of each volumic cell is determined by implementing the following ratio:

$$\Delta C = \sum_{i=0}^{i=n} Ri \Big/ \Delta T_T \quad \text{in which}$$

$$\Delta T_T = \sum_{i=1}^{i=n} \Delta Ti \quad \text{is the total time interval of}$$

the simulation.

7. A computer-implemented method according to any of the claims from 3 to 6, **characterised in that** said discriminating step comprises the step of verifying, for each volumic cell, whether the respective immersion parameter ($\Delta$C) meets a certain ratio with a predetermined immersion threshold or not.

8. A computer-implemented method according to any of the claims from 3 to 7, **characterised in that** it comprises the step of determining on the basis of said volumic cell immersion parameters ($\Delta$C), a total immersion volumic map which corresponds to a volumic grid in which is assigned to each volumic cell

the immersion parameter ($\Delta$C) determined in the total simulation time interval ($\Delta$TT).

9. An electronic computer **characterised in that** it implements a computer-implemented method as indicated in any of the preceding claims.

10. A software product loadable in the memory of the processing means and designed to implement, when run, the computer-implemented method according to any of the claims from 1 to 8.

**Patentansprüche**

1. Computerimplementiertes Verfahren zur Bestimmung der dynamischen Verteilung einer Flüssigkeit in einem Fahrzeugtank, **dadurch gekennzeichnet, daß** es die Schritte aufweist:

- Simulieren (160) von Verschiebungen des Tanks gemäß einem bestimmten Schwingungsgesetz bezogen auf die Bewegung des Fahrzeugs;
- während der Simulation zu vorbestimmten Zeitpunkten (ti) erfolgendes Berechnen (170) der Volumenverteilung (Dti) von Flüssigkeit im Tank;
- auf der Grundlage der zu den vorbestimmten Zeitpunkten (ti) berechneten Volumenverteilungen (Dti) erfolgendes Unterscheiden (180) der Raumabschnitte im Tank, die während der Simulation nicht mit der Flüssigkeit in Kontakt kommen.

2. Computerimplementiertes Verfahren nach Anspruch 1 mit dem Schritt: auf der Grundlage der Volumenverteilungen (Dti) erfolgendes Unterscheiden (180) der Raumabschnitte im Tank, die in der Flüssigkeit für ein Zeitintervall vorübergehend eingetaucht werden, das kürzer als ein vorbestimmter Zeitschwellwert ist.

3. Computerimplementiertes Verfahren nach Anspruch 1 oder 2 mit den Schritten

- Darstellen des Tanks mittels eines Volumengitters, das mehrere Volumenfüllzellen aufweist;
- zu jeder Volumenzelle erfolgendes Zuweisen (140) einer Anfangskonzentration (Cci), die den Füllprozentsatz von Flüssigkeit in der Volumenzelle selbst angibt;
- während der Simulation für jede Volumenzelle erfolgendes Bestimmen (170) der entsprechenden Konzentrationen (Cci) von Flüssigkeit zu jedem Zeitpunkt (ti);

wobei der Unterscheidungsschritt (180) den Schritt aufweist: für jede Volumenzelle zu jedem Zeitpunkt (ti) erfolgendes Bestimmen eines Füllparameters (Ri) der Volumenzelle bezogen sowohl auf die Konzentration (Cci) als auch auf das Zeitintervall (∆Ti), das zwischen dem aktuellen Zeitpunkt (ti) und einem vorherigen Zeitpunkt (ti - 1) abgelaufen ist.

4. Computerimplementiertes Verfahren nach Anspruch 3, wobei der Unterscheidungsschritt (180) den Schritt aufweist: für jede Volumenzelle erfolgendes Unterscheiden eines Eintauchparameters (∆C) bezogen auf einen Gesamtfüllprozentsatz der Volumenzelle selbst im Gesamtsimulationsintervall (∆TT).

5. Computerimplementiertes Verfahren nach Anspruch 4, wobei der Eintauchparameter (∆C) auf die Gesamtheit von Füllparametern (Ri) bezogen ist.

6. Computerimplementiertes Verfahren nach Anspruch 4 oder 5, **dadurch gekennzeichnet, daß** der Eintauchparameter (∆C) jeder Volumenzelle durch Implementieren des folgenden Verhältnisses bestimmt wird:

$$\Delta C = \sum_{i=0}^{i=n} Ri / \Delta T_T \text{ , wobei}$$

$$\Delta T_T = \sum_{i=1}^{i=n} \Delta T_i \quad \text{das Gesamtzeitintervall}$$

der Simulation ist.

7. Computerimplementiertes Verfahren nach einem der Ansprüche 3 bis 6, **dadurch gekennzeichnet, daß** der Unterscheidungsschritt den Schritt aufweist: für jede Volumenzelle erfolgendes Überprüfen, ob der jeweilige Eintauchparameter (∆C) ein bestimmtes Verhältnis mit einem vorbestimmten Eintauchschwellwert erfüllt oder nicht erfüllt.

8. Computerimplementiertes Verfahren nach einem der Ansprüche 3 bis 7, **dadurch gekennzeichnet, daß** es den Schritt aufweist: auf der Grundlage der Volumenzellen-Eintauchparameter (∆C) erfolgendes Bestimmen eines Gesamteintauchvolumenkennfelds, das einem Volumengitter entspricht, in dem jeder Volumenzelle der Eintauchparameter (∆C) zugeordnet ist, der im Gesamtsimulationszeitintervall (∆TT) bestimmt wird.

9. Elektronischer Computer, **dadurch gekennzeichnet, daß** er ein computerimplementiertes Verfahren nach einem der vorstehenden Ansprüche implementiert.

10. Softwareprodukt, das in den Speicher der Verarbeitungseinrichtung ladbar und so gestaltet ist, daß es bei Ausführung das computerimplementierte Verfahren nach einem der Ansprüche 1 bis 8 implementiert.

## Revendications

1. Procédé mis en application par ordinateur destiné à déterminer la distribution dynamique d'un fluide à l'intérieur d'un réservoir de véhicule, **caractérisé en ce qu'**il comprend les étapes consistant à :

- simuler (160) des déplacements du réservoir selon une certaine loi d'oscillation qui se rapporte au mouvement dudit véhicule :

- calculer (170), au cours de ladite simulation, à des instants de temps prédéterminés (ti), la distribution volumique (Dti) du fluide à l'intérieur dudit réservoir ;
- distinguer (180), sur la base des distributions volumiques (Dti) calculées auxdits instants de temps prédéterminés (ti), les parties d'espace à l'intérieur dudit réservoir qui ne viennent pas en contact avec le fluide au cours de ladite simulation.

2. Procédé mis en application par ordinateur selon la revendication 1, comprenant l'étape consistant à distinguer (180), sur la base des distributions volumiques (Dti), les parties d'espace à l'intérieur dudit réservoir qui sont temporairement immergées dans le liquide pendant un intervalle de temps plus court qu'un seuil de temps prédéterminé.

3. Procédé mis en application par ordinateur selon la revendication 1 ou la revendication 2, comprenant les étapes consistant à :

- représenter ledit réservoir au moyen d'une grille volumique qui comprend une pluralité de cellules de remplissage volumiques ;
- attribuer (140) à chaque cellule volumique une concentration initiale (Cci) qui indique le pourcentage de remplissage de fluide dans la cellule volumique elle-même.
- au cours de ladite simulation, déterminer (170) pour chaque cellule volumique, les concentrations correspondantes (Cci) de fluide à chaque instant de temps (ti) ;

ladite étape de distinction (180) comprenant l'étape consistant à déterminer pour chaque cellule volumique et à chaque instant de temps (ti) un paramètre de remplissage (Ri) de ladite cellule volumique qui se rapporte à ladite concentration (Cci) et audit intervalle de temps (∆Ti) qui s'est écoulé entre l'instant de temps actuel (ti) et un instant de temps précédent (ti - 1).

4. Procédé mis en application par ordinateur selon la revendication 3, dans lequel ladite étape de distinction (180) comprend l'étape consistant à distinguer, pour chaque cellule volumique, un paramètre d'immersion (ΔC) qui se rapporte à un pourcentage de remplissage total de la cellule volumique elle-même dans l'intervalle de simulation total (ΔTT).

5. Procédé mis en application par ordinateur selon la revendication 4, dans lequel ledit paramètre d'immersion (ΔC) se rapporte à l'ensemble des paramètres de remplissage (Ri).

6. Procédé mis en application par ordinateur selon la revendication 4 ou la revendication 5, **caractérisé en ce que** ledit paramètre d'immersion (ΔC) de chaque cellule volumique est déterminée en mettant en application le rapport suivant :

$$\Delta C = \sum_{i=0}^{i=n} Ri \,/\, \Delta T_T \quad \text{dans lequel}$$

$$\Delta T_T = \sum_{i=1}^{i=n} \Delta Ti \quad \text{est l'intervalle de temps total}$$

de la simulation.

7. Procédé mis en application par ordinateur selon l'une quelconque des revendications 3 à 6, **caractérisé en ce que** ladite étape de distinction comprend l'étape consistant à vérifier, pour chaque cellule volumique, si le paramètre d'immersion respectif (ΔC) satisfait ou pas à un certain rapport avec un seuil d'immersion prédéterminé.

8. Procédé mis en application par ordinateur selon l'une quelconque des revendications 3 à 7, **caractérisé en ce qu'**il comprend l'étape consistant à déterminer, sur la base desdits paramètres d'immersion de cellule volumique (ΔC), une carte volumique d'immersion totale qui correspond à une grille volumique dans laquelle le paramètre d'immersion (ΔC) déterminé dans l'intervalle de temps de simulation total (ΔTT) est attribué à chaque cellule volumique.

9. Ordinateur électronique, **caractérisé en ce qu'**il met en application un procédé mis en application par ordinateur, selon l'une quelconque des revendications précédentes.

10. Produit logiciel pouvant être chargé dans la mémoire des moyens de traitement et conçu de manière à mettre en application, quand il est exécuté, le procédé mis en application par ordinateur, selon l'une quelconque des revendications 1 à 8.

START

Geometric modelling of the vehicle tank | 100

Define surface mesh representing
the inner part of the tank | 110

Define volumic grid representing
the space within the tank | 120

Assign physical parameters
characterising the fuel | 130

Define initial volume distributions
$Dt_0$ of fuel within the tank | 140

Define oscillation law | 150

Run simulation and calculate
concentrations Ci of fuel in each
volumic cell in each time instant ti | 160

Calculate for each volumic cell
an immersion parameter $\Delta C$ correlated
to a total filling percentage of the
volumic cell in the total simulation interval | 170

Discriminate the volumic cells,
whose immersion parameter $\Delta C$
meets a certain ratio with
a predetermined immersion threshold | 180

END

Fig. 1

Fig. 2

Fig. 3

Fig. 4

Fig. 5

START

Calculate time parameter $\Delta T_i$ associated to
the volumic distribution Dti to be processed — 200

Determine and store
a filling parameter $R_i$
for each volumic cell — 210

230

$t_{i+1}$  ←  NO  $t_i = t_n$ ?  YES — 220

Calculate the immersion parameter $\Delta C$
for each volumic cell — 240

END

Fig.   6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19924207